# FASCICULE DE BREVET EUROPEEN

(11) **EP 2 552 725 B1**
(45) Date de publication et mention de la délivrance du brevet: **05.03.2014**
(21) Numéro de dépôt: 11717305.4
(22) Date de dépôt: 30.03.2011
(51) Int. Cl.: B60K 37/00, F16B 17/00, B62D 25/14

(54) **STRUCTURE DE PLANCHE DE BORD DE VÉHICULE AUTOMOBILE AVEC TRAVERSE À MOYENS DE FIXATION INTÉGRÉS**
ARMATURENBRETTAUFBAU FÜR EIN KRAFTFAHRZEUG MIT EINER KREUZVERSTREBUNG MIT INTEGRIERTEN BEFESTIGUNGSLEMENTEN
DASHBOARD STRUCTURE FOR A MOTOR VEHICLE COMPRISING A CROSSPIECE HAVING BUILT-IN ATTACHMENT MEANS

(30) Priorité: 31.03.2010 FR 1052420
(43) Date de publication de la demande: 06.02.2013
(73) Titulaire: Faurecia Intérieur Industrie, 92000 Nanterre (FR)
(72) Inventeur: DA COSTA PITO, Sergio, F-95800 Cergy (FR); BRANCHERIAU, Christian, F-95220 Herblay (FR)
(74) Mandataire: Blot, Philippe Robert Emile
(86) Numéro de dépôt international: PCT/FR2011/050699
(87) Numéro de publication internationale: WO 2011/121233

(56) Documents cités:
- EP-A1- 2 000 393
- EP-A2- 0 982 087
- DE-A1- 19 741 551
- FR-A1- 2 907 415

## Description

La présente invention concerne une structure de planche de bord de véhicule automobile, du type comprenant une traverse et au moins un dispositif de fixation d'une extrémité latérale de la traverse à un élément de structure du véhicule à une position déterminée, le dispositif de fixation comportant un organe femelle dans lequel vient s'engager au moins un organe mâle de l'élément de structure du véhicule pour la fixation de l'extrémité latérale à l'élément de structure du véhicule et au moins un loquet de retenue du ou de chaque organe mâle dans l'organe femelle, le ou chaque loquet étant logé dans l'organe femelle.

Les structures de planche de bord sont destinées à supporter des équipements de véhicule automobile, notamment une colonne de direction, un système ventilation de chauffage et/ou de climatisation de l'habitacle, un tableau de bord ou une boîte à gants. Elles contribuent à rigidifier la caisse du véhicule automobile.

On connaît des structures de planche de bord de véhicule automobile comprenant une traverse dont les extrémités latérales sont fixées à un ensemble structurel de véhicule automobile. Le dispositif de fixation de ces extrémités latérales inclut généralement des boîtiers rapportés aux deux extrémités de la traverse.

Cette traverse présente donc une rupture d'inertie entre la poutre et les boîtiers de fixation. Pour compenser cette perte d'inertie, les boîtiers de fixation sont fortement soudés sur la poutre. Cette soudure est coûteuse et longue à réaliser. En outre, ces boîtiers alourdissent le véhicule.

Ces boîtiers incluent généralement une entretoise de rigidification qui augmente encore le poids des boîtiers.

En outre, la fixation de ces boîtiers à l'élément de structure du véhicule se fait généralement par vissage, opération longue et coûteuse à réaliser.

FR2926858 décrit un dispositif de fixation des extrémités latérales d'une traverse de planche de bord évitant l'opération de vissage. Le dispositif inclut un boîtier de fixation dans lequel vient s'engager un organe mâle pour la fixation de la traverse à l'élément de structure du véhicule. Après fixation, un loquet logé dans le boîtier retient l'organe mâle.

Ce boîtier peut être monté sur la traverse, l'organe mâle étant alors un élément de l'élément de structure du véhicule. Toutefois, l'intégration dudit boîtier à la traverse engendre là encore une augmentation du poids.

Le document DE 197 41 551 A1 décrit une structure comprenant toutes les caractéristiques du préambule de la revendication 1.

Un objectif de l'invention est donc de proposer un dispositif de fixation des extrémités latérales d'une planche de bord de véhicule automobile qui permette d'alléger le véhicule par rapport aux dispositifs actuellement connus.

A cet effet, l'invention a pour objet une structure de planche de bord de véhicule automobile du type précité, caractérisé en ce que la traverse comprend au moins un tronçon tubulaire réalisé d'un seul tenant et comprenant une portion courante et une portion d'extrémité de traverse définissant l'extrémité latérale, l'organe femelle étant en partie formé par une partie de la portion d'extrémité de traverse.

La planche de bord selon l'invention peut comprendre l'une ou plusieurs des caractéristiques suivantes, prise(s) isolément ou selon toute(s) combinaison(s) techniquement possible(s) :
- la structure comporte une entretoise logée à l'intérieur de la portion d'extrémité de traverse ;
- l'entretoise définit l'organe femelle avec la partie de la portion d'extrémité de traverse ;
- le ou chaque loquet est mobile dans l'organe femelle entre une position de blocage du ou de chaque organe mâle et une position d'attente dans laquelle le ou chaque loquet est en retrait par rapport à sa position de blocage, l'entretoise étant adaptée pour guider le ou chaque loquet entre ces deux positions ;
- la portion d'extrémité de traverse est de section plus grande que celle de la portion courante ;
- la partie de la portion d'extrémité de traverse est de section rectangulaire ;
- la structure comporte au moins un flasque latéral de fixation d'éléments de planche de bord enchâssé sur la portion d'extrémité de traverse ;
- le ou chaque loquet est propre à être déplacé par un actionneur d'un dispositif d'installation de planche de bord sur le véhicule ;

L'invention a également pour objet un procédé de fabrication d'une structure de planche de bord de véhicule automobile du type comportant une traverse et au moins un dispositif de fixation d'une extrémité latérale de la traverse à un élément de structure du véhicule à une position déterminée, le dispositif de fixation comportant un organe femelle dans lequel vient s'engager au moins un organe mâle de l'élément de structure du véhicule pour la fixation de l'extrémité latérale à l'élément de structure du véhicule et au moins un loquet de retenue du ou de chaque organe mâle, le ou chaque loquet étant logé dans l'organe femelle, caractérisé en ce que le procédé comporte les étapes suivantes :
- fourniture d'au moins un tube ;
- déformation d'au moins une portion d'extrémité du ou de chaque tube, de façon à ce que la ou chaque portion d'extrémité forme une partie du ou de chaque organe femelle ; et
- introduction du ou de chaque loquet à l'intérieur de la ou chaque portion d'extrémité ainsi conformée.

Le procédé de fabrication selon l'invention peut comprendre l'une ou plusieurs des caractéristiques suivantes, prise(s) isolément ou selon toute(s) combinaison(s) techniquement possible(s) :
- une entretoise est introduite à l'intérieur de la ou de chaque portion d'extrémité, en même temps que le ou chaque loquet ;
- le tube est conformé de façon à ce qu'une partie de la ou chaque portion d'extrémité ait une section rectangulaire ;
- la ou chaque portion d'extrémité du ou de chaque tube est déformée par emboutissage ou par hydroformage.

La présente invention sera mieux comprise à la lecture de la description qui va suivre, donnée uniquement à titre d'exemple, et faite en se référant aux dessins annexés, sur lesquels :
- la Figure 1 représente une vue en face arrière montrant une moitié gauche d'une structure de planche de bord de véhicule automobile selon l'invention ;
- la Figure 2 représente une vue en perspective de trois-quarts avant d'une portion d'extrémité de traverse de la structure de planche de bord de la Figure 1 ;
- la Figure 3 représente une vue en perspective d'éléments logés à l'intérieur de la portion d'extrémité de traverse de la Figure 2.

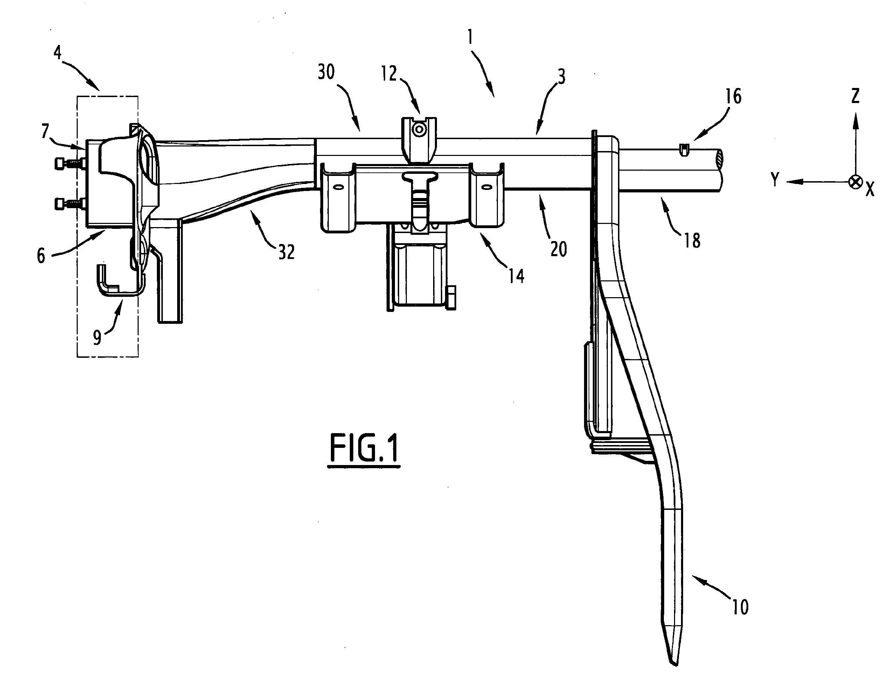

Dans la suite, les termes d'orientation s'entendent par rapport au repère orthogonal usuel des véhicules automobiles, représenté sur les Figures 1 à 3, et dans lequel on distingue :
- un axe longitudinal X, horizontal, s'étendant de l'arrière vers l'avant ;
- un axe transversal Y, horizontal, s'étendant de la droite vers la gauche ; et
- un axe vertical Z s'étendant du bas vers le haut.

La structure 1 de planche de bord de véhicule automobile partiellement représentée sur la Figure 1 comporte une traverse 3 destinée à s'étendre transversalement entre deux éléments de structure de véhicule automobile, dont seul l'élément de structure gauche 4 est ici représenté, un dispositif de fixation 6 d'une extrémité latérale gauche 7 de la traverse 3 à l'élément de structure gauche 4 à une position déterminée et un flasque latéral 9 de fixation d'éléments de la planche de bord. La structure comporte également un deuxième dispositif de fixation (non représenté) d'une extrémité latérale droite (non représentée) de la traverse 3 à l'élément de structure gauche (non représenté). Ce deuxième dispositif de fixation est similaire au dispositif de fixation 6 et ne sera pas décrit ici. En variante, le deuxième dispositif de fixation est différent du dispositif de fixation 6.

Les éléments de structure tel que l'élément de structure gauche 4 sont typiquement des montants latéraux de caisse, s'étendant sensiblement verticalement, de part et d'autre de la planche de bord, et se prolongeant verticalement de part et d'autre du pare-brise.

Dans l'exemple illustré, la structure 1 de planche de bord comprend en outre des jambes de force 10, dont seule la jambe de force gauche est ici représentée, pour relier la traverse 3 au plancher du véhicule automobile et/ou un organe de liaison 12 pour relier la traverse 3 à une traverse inférieure de baie (non représentée) de la caisse du véhicule automobile, passant transversalement sous le pare-brise du véhicule. Cet organe de liaison 12 est généralement désigné sous le terme de liaison TIB (Traverse Inférieure de Baie).

La structure 1 de planche de bord peut encore comprendre une platine 14 de fixation de la colonne de direction du véhicule, ainsi que différentes pattes 16 prévues pour fixer différents éléments de la planche de bord à la traverse 3. Ces éléments sont par exemple la boîte à gant, des conduits de ventilation, un autoradio etc.

La traverse 3 comprend ici un premier tronçon 18, représenté partiellement, et un deuxième tronçon 20. Ces tronçons 18, 20 sont distincts et fixés rigidement l'un à l'autre. Le premier tronçon 18 et le deuxième tronçon 20 se prolongent l'un l'autre transversalement.

Chacun des premier 18 et deuxième 20 tronçons s'étend sur une partie de la longueur de la traverse 3, entre une extrémité latérale de la traverse 3, et l'autre tronçon. Le premier tronçon 18 est situé du côté passager (à droite sur la Figure 1) et le deuxième tronçon 20 est situé du côté conducteur (à gauche sur la Figure 1).

Dans l'exemple illustré, une jambe de force 10 sert d'interface de fixation des premier 18 et deuxième 20 tronçons entre eux. Chacun des premier 18 et deuxième 20 tronçons est fixé sur la jambe de force 10 formant interface. Les premier 18 et deuxième 20 tronçons sont décalés l'un par rapport à l'autre, dans un plan perpendiculaire à la direction transversale, de part et d'autre de la jambe de force 10. En variante, ils sont en regard l'un de l'autre de part et d'autre de la jambe de force 10.

La jambe de force 10 formant interface est ici la jambe de force 10 gauche. Le premier tronçon 18 s'étend entre l'extrémité latérale droite de la traverse 3 et la jambe de force 10 gauche, et le deuxième tronçon 20 s'étend entre la jambe de force 10 gauche et l'extrémité latérale gauche 7 de la traverse 3.

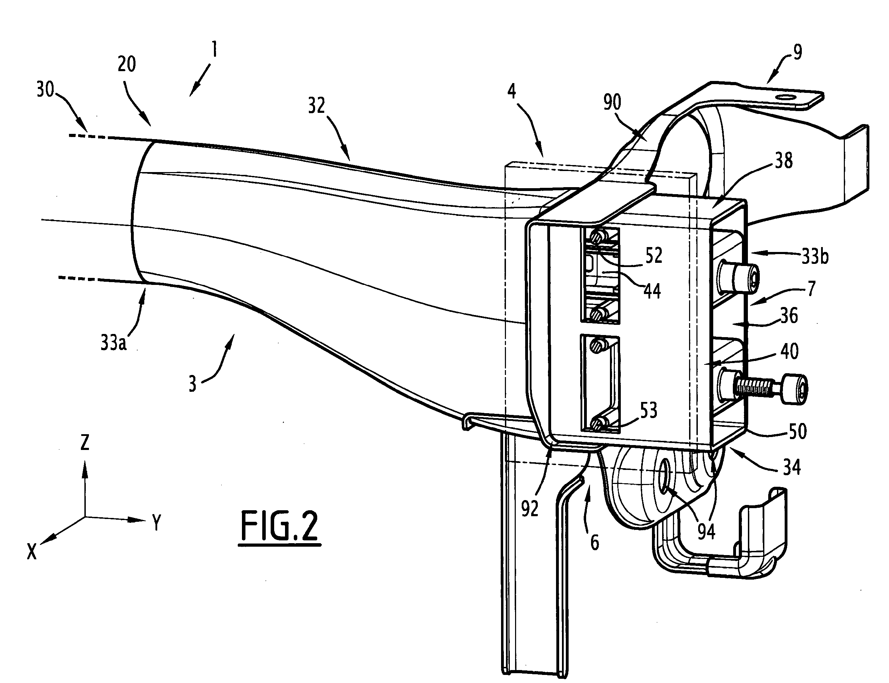

Le deuxième tronçon 20 est tubulaire. Comme représenté sur la Figure 2, il comprend une portion courante 30 et une portion d'extrémité de traverse 32. Il est réalisé d'un seul tenant, c'est-à-dire d'une seule pièce de matière. Les portions courante 30 et d'extrémité de traverse 32 sont donc venues de matière l'une avec l'autre. La portion d'extrémité de traverse 32 définit l'extrémité latérale gauche 7 de la traverse 3.

La portion courante 30 est par exemple de section circulaire constante. Elle s'étend entre la jambe de force 10 et la portion d'extrémité de traverse 32.

La portion d'extrémité de traverse 32 comprend une première extrémité 33a solidaire de la portion courante 30 et une deuxième extrémité 33b libre. La deuxième extrémité 33b constitue l'extrémité latérale gauche 7 de la traverse 3.

La portion d'extrémité de traverse 32 est évasée. Sa section varie. Sa section est croissante de manière monotone de la première extrémité 33a vers la deuxième extrémité 33b. Sa section est sensiblement circulaire au niveau de la première extrémité 33a. Sa section est rectangulaire au niveau de la deuxième extrémité 33b.

La portion d'extrémité de traverse 32 comprend une partie 34 de section rectangulaire constante formant la deuxième extrémité 33b. La partie 34 forme un tube ouvert à ses extrémités, orienté sensiblement transversalement. Elle présente une face intérieure 36, qui correspond à l'intérieur du tube, et une face extérieure 38. La face extérieure 38 présente une face avant 40, orientée vers l'avant du véhicule.

Le flasque latéral gauche 9 est enchâssé sur la portion d'extrémité de traverse 32. Il se présente sous la forme d'une plaque comportant des rebords de rigidification 90, une ouverture rectangulaire 92 dans laquelle est engagée la portion d'extrémité de traverse 32 et des moyens de fixation 94 d'éléments de planche de bord, typiquement d'un habillage de planche de bord.

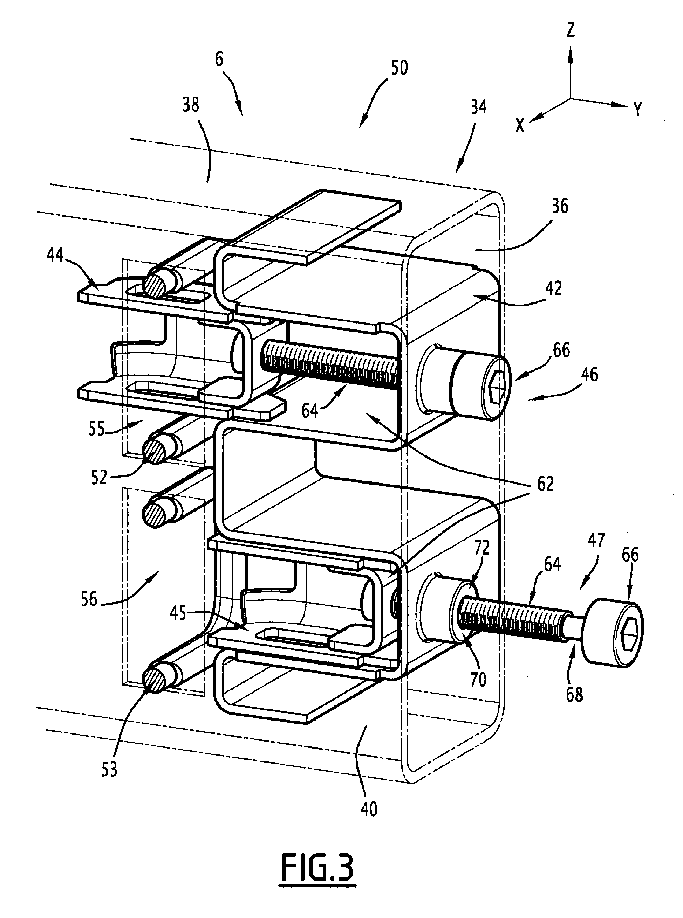

Comme visible sur la Figure 3, le dispositif de fixation 6 de l'extrémité latérale gauche 7 de la traverse 3 à l'élément de structure 4 est formé par la partie 34 de la portion d'extrémité de traverse 32 et comprend en outre une entretoise 42, deux loquets 44, 45 et deux vis 47, 48.

L'entretoise 42 est logée à l'intérieur de la partie 34 de la portion d'extrémité de traverse 32. Elle forme, avec la partie 34 de la portion d'extrémité de traverse 32, un organe femelle 50 du dispositif de fixation 6. L'organe femelle 50 est apte à accueillir deux organes mâles 52, 53 de l'ensemble structurel 16.

A cette fin, la partie 34 de la portion d'extrémité de traverse 32 présente sur sa face avant 40 deux fenêtres 55, 56 de passage des organes mâles 52, 53. Chaque fenêtre 52, 53 est traversante et débouche dans les faces intérieure 36 et extérieure 38 de la partie 34.

Chaque loquet 44, 45 est propre à retenir l'un respectivement 52, 53 des organes mâles engagé dans l'organe femelle 50. A cette fin, chaque loquet 44, 45 est mobile par rapport à l'organe femelle 50 entre une position de blocage de chacun des organes mâles 52, 53 et une position d'attente. L'entretoise 42 est adaptée pour collaborer avec la partie 34, de façon à guider chacun des loquets 44, 45 entre ces deux positions et à bloquer en rotation chacun des loquets 44, 45.

Sur la Figure 3, le loquet 44 est représenté en position de blocage et le loquet 45 en position d'attente.

En position de blocage, le loquet 44, 45 est placé en regard de l'une respectivement 55, 56 des fenêtres de passage des organes mâles 52, 53. Le loquet 44, 45 est engagé dans une boucle respectivement 58, 59 formée par l'un respectivement 52, 53 des organes mâles. Le loquet 44, 45 bloque l'organe mâle, respectivement 52, 53, qui ne peut plus être extrait facilement de l'organe femelle 50.

En position d'attente, le loquet 44, 45 est placé en retrait de sa position de blocage. Il est placé en retrait des fenêtres 55, 56. Il est logé dans une niche 62 formée par l'entretoise 42. L'organe mâle respectivement 52, 53 est libre d'être inséré dans ou extrait de l'organe femelle 50.

Chaque loquet 44, 45 est propre à être déplacé entre sa position de blocage et sa position d'attente par un actionneur linéaire, par exemple un vérin. L'actionneur est par exemple porté par un dispositif d'installation de la planche de bord sur le véhicule.

Chaque vis 47, 48 comporte un corps 64 fileté, une tête 66 et une gorge 68 de blocage de la vis 47, 48. La gorge 68 est intercalée entre le corps 64 et la tête 66.

Chaque vis 47, 48 est partiellement vissée à l'un respectivement 44, 45 des loquets. Le filetage du corps 64 collabore avec un taraudage de l'un respectivement 44, 45 des loquets pour convertir un mouvement de rotation de la vis 47, 48 en mouvement de translation du loquet respectivement 44, 45, pour le démontage de la planche de bord uniquement.

Chaque vis 47, 48 traverse l'entretoise 42 à travers une ouverture 70. Chaque ouverture 70 est équipée d'une languette 72 de retenue de l'une des vis 47, 48.

Chaque vis 47, 48 est mobile par rapport à l'organe femelle 50 entre une position extraite et une position introduite. Sur la Figure 3, la vis 47 est représentée en position introduite et la vis 48 est représentée en position extraite.

En position extraite, la tête 66 et la gorge 68 sont à l'écart de l'entretoise 42. Le corps 64 est en partie engagé dans l'ouverture 70. La vis 47, 48 est libre en translation.

En position introduite, la tête 66 est au contact de l'entretoise 42. La gorge 68 est engagée dans l'ouverture 70. La gorge 68 collabore avec la languette 72 pour empêcher toute translation de la vis 47, 48.

Chaque vis 47, 48 est apte à être translatée de sa position extraite à sa position introduite par un actionneur linéaire d'un dispositif d'installation de la planche de bord sur le véhicule.

Nous allons maintenant décrire le procédé de fixation de la structure de planche de bord 1 aux éléments de structure 7a, 7b de véhicule automobile.

Dans un premier temps, on fournit la structure 1 de planche de bord avec les vis 47, 48 en position extraite et les loquets 44, 45 en position d'attente. La structure de planche de bord 1 est placée par un dispositif d'installation de la planche de bord sur le véhicule de façon à ce que les organes mâles 52, 53 de l'élément de structure 4 traversent les fenêtres 55, 56.

Puis des actionneurs du dispositif d'installation translatent les vis 47, 48 de leur position extraite à leur position introduite. Ce faisant, les vis 47, 48 entraînent les loquets 44, 45 qui sont déplacés de leur position d'attente à leur position de blocage. Les organes mâles 52, 53 sont alors bloqués et ne peuvent plus être extraits facilement hors de l'organe femelle 50. La structure 1 de planche de bord est alors fixée à l'élément de structure 4.

La collaboration entre les languettes 72 et la gorge 68 de chaque vis 47, 48 évite toute translation inopportune des vis 47, 48 et assure ainsi le maintien des loquets 44, 45 en position de blocage.

Pour démonter la structure 1 de planche de bord de l'élément de structure 4, les vis 47, 48 sont mises en rotation. Par collaboration entre le filetage des vis 47, 48 et le taraudage des loquets 44, 45, il en résulte une translation des loquets 44, 45 qui reviennent à leur position d'attente. Les organes mâles 52, 53 sont alors libérés et peuvent être extraits facilement hors de l'organe femelle 50.

Nous allons maintenant décrire le procédé de fabrication de la structure 1 de planche de bord.

Dans un premier temps sont fournis deux tubes, ainsi que la jambe de force 10. Chaque tube est déformé à une extrémité, par exemple par emboutissage ou par hydroformage, de façon à ce qu'une portion d'extrémité du tube forme une partie de l'organe femelle 50 et à ce que la section de l'extrémité soit rectangulaire. Des ouvertures sont ensuite découpées de façon à former les fenêtres 55, 56 d'insertion des organes mâles. Chaque tube est alors fixé, par son autre extrémité, à la jambe de force 10, de part et d'autre, de façon à former la traverse 3.

En variante, seul un tube est fourni. Celui-ci est alors déformé à ses deux extrémités, par exemple par emboutissage ou par hydroformage, de façon à ce que chaque portion d'extrémité du tube forme une partie de l'organe femelle 50 et à ce que la section de chaque extrémité soit rectangulaire. Des ouvertures sont ensuite découpées dans chaque extrémité de façon à former les fenêtres 55, 56 d'insertion des organes mâles. Le tube ainsi conformé forme alors la traverse 3.

Dans un deuxième temps, l'entretoise 42, les loquets 44, 45, les vis 47, 48 sont introduits à l'intérieur de chaque portion d'extrémité de traverse 32. Puis l'entretoise 42 est soudée à la traverse 3.

Enfin, les autres éléments de structure, tels que la liaison TIB 12, la platine 14 et les pattes 16 sont fixés à la structure 1. En variante, ces éléments sont ajoutés à la structure 1 plus tôt dans le procédé.

Grâce à l'invention, le véhicule ne comporte plus de boîtiers dédiés à la fixation de la planche de bord sur les montants ; ceux-ci sont en effet formés directement par l'extrémité de la traverse de planche de bord. Le véhicule s'en trouve allégé.

En outre, le fait de prévoir une entretoise introduite dans l'extrémité de traverse permet de rigidifier le dispositif de fixation, tout en permettant le guidage des loquets. De même, le fait que la portion d'extrémité de traverse soit évasée et venue de matière avec le reste du tronçon d'extrémité latérale contribue encore à la rigidité de l'ensemble.

Enfin, grâce au dispositif de fixation prévu, l'assemblage de la planche de bord sur un véhicule automobile s'en trouve simplifié.

La description donnée ci-dessus fait uniquement figure d'exemple, aussi est-il possible d'introduire des variations, sans pour autant sortir du cadre de l'invention.

Ainsi, la partie du tronçon latéral d'extrémité formant l'organe femelle a été décrite rectangulaire, mais elle peut également présenter d'autres formes.

De même, le dispositif de fixation peut comporter aussi bien deux loquets qu'un seul, que trois, ou plus.

## Revendications

1. Structure (1) de planche de bord de véhicule automobile, comprenant une traverse (3) et au moins un dispositif de fixation (6) d'une extrémité latérale (7) de la traverse (3) à un élément de structure (4) du véhicule à une position déterminée, dispositif de fixation (6) comportant un organe femelle (50) dans lequel vient s'engager au moins un organe mâle (52, 53) de l'élément de structure (4) du véhicule pour la fixation de l'extrémité latérale (7) à l'élément de structure (4) du véhicule la traverse (3) comprend au moins un tronçon (20) tubulaire réalisé d'un seul tenant et comprenant une portion courante (30) et une portion d'extrémité de traverse (32) définissant l'extrémité latérale (7), l'organe femelle (50) étant en partie formé par une partie (34) de la portion d'extrémité de traverse (32), **caractérisée en ce que** au moins un loquet (44, 45) de retenue du ou de chaque organe mâle (52, 53) dans l'organe femelle (50) est prevu, le ou chaque loquet (44, 45) étant logé dans l'organe femelle (50).

2. Structure (1) de planche de bord de véhicule automobile selon la revendication 1, **caractérisée en ce qu'**elle comporte une entretoise (42) logée à l'intérieur de la portion d'extrémité de traverse (32).

3. Structure (1) de planche de bord de véhicule automobile selon la revendication 2, **caractérisée en ce que** l'entretoise (42) définit l'organe femelle (50) avec la partie (34) de la portion d'extrémité de traverse (32).

4. Structure (1) de planche de bord de véhicule automobile selon la revendication 5, **caractérisée en ce que** le ou chaque loquet (44, 45) est mobile dans l'organe femelle (50) entre une position de blocage du ou de chaque organe mâle (52, 53) et une position d'attente dans laquelle le ou chaque loquet (44, 45) est en retrait par rapport à sa position de blocage, l'entretoise (42) étant adaptée pour guider le ou chaque loquet (44, 45) entre ces deux positions.

5. Structure (1) de planche de bord de véhicule automobile selon l'une quelconque des revendications précédentes, **caractérisée en ce que** la portion d'extrémité de traverse (32) est de section plus grande que celle de la portion courante (30).

6. Structure (1) de planche de bord de véhicule automobile selon l'une quelconque des revendications précdédentes, **caractérisée en ce que** la partie (34) de la portion d'extrémité de traverse (32) est de section rectangulaire.

7. Structure (1) de planche de bord de véhicule automobile selon l'une quelconque des revendications précédentes, **caractérisée en ce qu'**elle comporte au moins un flasque latéral (9) de fixation d'éléments de planche de bord enchâssé sur la portion d'extrémité de traverse (32).

8. Structure (1) de planche de bord de véhicule automobile selon l'une quelconque des revendications précédentes, **caractérisée en ce que** le ou chaque loquet (44, 45) est propre à être déplacé par un actionneur d'un dispositif d'installation de planche de bord sur le véhicule.

9. Procédé de fabrication d'une structure (1) de planche de bord de véhicule automobile comportant une traverse (3) et au moins un dispositif de fixation (6) d'une extrémité latérale (7) de la traverse (3) à un élément de structure (4) du véhicule à une position déterminée, dispositif de fixation (6) comportant un organe femelle (50) dans lequel vient s'engager au moins un organe mâle (52, 53) de l'élément de structure (4) du véhicule pour la fixation de l'extrémité latérale (7) à l'élément de structure (4) du véhicule et au moins un loquet (44, 45) de retenue du ou de chaque organe mâle (52, 53), le ou chaque loquet (44, 45) étant logé dans l'organe femelle (50), **caractérisé en ce qu'**il comporte les étapes suivantes :
- fourniture d'au moins un tube ;
- déformation d'au moins une portion d'extrémité du ou de chaque tube, de façon à ce que la ou chaque portion d'extrémité (32) forme une partie du ou de chaque organe femelle (50) ; et
- introduction du ou de chaque loquet (44, 45) à l'intérieur de la ou chaque portion d'extrémité (32) ainsi conformée.

10. Procédé de fabrication selon la revendication 9, **caractérisé en ce qu'**une entretoise (42) est introduite à l'intérieur de la ou de chaque portion d'extrémité (32), en même temps que le ou chaque loquet (44, 45).

11. Procédé de fabrication selon l'une quelconque des revendications 9 ou 10, **caractérisé en ce que** le tube est conformé de façon à ce qu'une partie (34) de la ou chaque portion d'extrémité (32) ait une section rectangulaire.

12. Procédé de fabrication selon l'une quelconque des revendications 9 à 11, **caractérisé en ce que** la ou chaque portion d'extrémité (32) du ou de chaque tube est déformée par emboutissage ou par hydroformage.

## Patentansprüche

1. Instrumententafelaufbau (1) für ein Kraftfahrzeug, der einen Querträger (3) und mindestens eine Vorrichtung (6) zur Befestigung eines Seitenendes (7) des Querträgers (3) an einem Strukturelement (4) des Fahrzeugs in einer vorbestimmten Stellung umfasst, wobei die Befestigungsvorrichtung (6) ein Aufnahmeelement (50) aufweist, in das mindestens ein Einsteckelement (52, 53) des Strukturelements (4) des Fahrzeugs für die Befestigung des Seitenendes (7) an dem Strukturelement (4) des Fahrzeugs eingreifen kann, wobei der Querträger (3) mindestens einen Rohrabschnitt (20), der in einem Stück hergestellt ist und einen laufenden Bereich (30) und einen Querträger-Endbereich (32), der das Seitenende (7) definiert, umfasst, wobei das Aufnahmeelement (50) teilweise von einem Teil (34) des Querträger-Endbereichs (32) gebildet wird, **dadurch gekennzeichnet, dass** mindestens ein Schloss (44, 45) zum Halten des oder jedes Einsteckelements (52, 53) in dem Aufnahmeelement (50) vorgesehen ist, wobei das oder jedes Schloss (44, 45) in dem Aufnahmeelement (50) untergebracht ist.

2. Instrumententafelaufbau (1) für ein Kraftfahrzeug nach Anspruch 1, **dadurch gekennzeichnet, dass** er einen Abstandshalter (42) aufweist, der im Inneren des Endbereichs des Querträgers (32) aufgenommen ist.

3. Instrumententafelaufbau (1) für ein Kraftfahrzeug nach Anspruch 2, **dadurch gekennzeichnet, dass** der Abstandshalter (42) das Aufnahmeelement (50) mit dem Teil (34) des Endbereichs des Querträgers (32) definiert.

4. Instrumententafelaufbau (1) für ein Kraftfahrzeug nach Anspruch 5, **dadurch gekennzeichnet, dass** das oder jedes Schloss (44, 45) in dem Aufnahmeelement (50) zwischen einer Position des Blockierens des oder jedes Einsteckelements (52, 53) und einer Bereitschaftsposition, in der das oder jedes Schloss (54, 55) in Bezug auf seine Position des Blockierens zurückgezogen ist, beweglich ist, wobei der Abstandshalter (42) ausgebildet ist, um das oder jedes Schloss (44, 45) zwischen diesen zwei Positionen zu führen.

5. Instrumententafelaufbau (1) für ein Kraftfahrzeug nach einem beliebigen der vorhergehenden Ansprüche, **dadurch gekennzeichnet, dass** der Endbereich des Querträgers (32) einen größeren Querschnitt als der laufende Bereich (30) aufweist.

6. Instrumententafelaufbau (1) für ein Kraftfahrzeug nach einem beliebigen der vorhergehenden Ansprüche, **dadurch gekennzeichnet, dass** das Teil (34) des Endbereichs des Querträgers (32) einen rechteckigen Querschnitt aufweist.

7. Instrumententafelaufbau (1) für ein Kraftfahrzeug nach einem beliebigen der vorhergehenden Ansprüche, **dadurch gekennzeichnet, dass** er mindestens einen Seitenflansch (9) zur Befestigung von Elementen der Instrumententafel, der an dem Endbereich des Querträgers (32) eingesetzt ist, aufweist.

8. Instrumententafelaufbau (1) für ein Kraftfahrzeug nach einem beliebigen der vorhergehenden Ansprüche, **dadurch gekennzeichnet, dass** das oder jedes Schloss (44, 45) geeignet ist, durch ein Betätigungselement einer Vorrichtung zur Installation der Instrumententafel an dem Fahrzeug verschoben zu werden.

9. Verfahren zur Herstellung eines Instrumententafelaufbaus (1) für ein Kraftfahrzeug, der einen Querträger (3) und mindestens eine Vorrichtung (6) zur Befestigung eines Seitenendes (7) des Querträgers (3) an einem Strukturelement (4) des Fahrzeugs in einer vorbestimmten Stellung umfasst, wobei die Befestigungsvorrichtung (6) ein Aufnahmeelement (50), in das mindestens ein Einsteckelement (52, 53) des Strukturelements (4) des Fahrzeugs für die Befestigung des Seitenendes (7) des Strukturelements (4) des Fahrzeugs eingreifen kann, und mindestens ein Schloss (44, 45) zum Halten des oder jedes Einsteckelements (52, 53) aufweist, wobei das oder jedes Schloss (44, 45) in dem Aufnahmeelement (50) vorgesehen ist, **dadurch gekennzeichnet, dass** es die folgenden Schritte umfasst:
- Liefern von mindestens einem Rohr;
- Verformen von mindestens einem Endbereich des oder jedes Rohrs, derart, dass der oder jeder Endbereich (32) ein Teil des oder jedes Aufnahmeelements (50) bildet; und
- Einführen des oder jedes Schlosses (44, 45) in das Innere des oder jedes so ausgebildeten Endbereichs (32).

10. Herstellungsverfahren nach Anspruch 9, **dadurch gekennzeichnet, dass** ein Abstandshalter (42) in das Innere des oder jedes Endbereichs (32) zugleich mit dem oder jedem Schloss (44,45) eingeführt wird.

11. Herstellungsverfahren nach einem beliebigen der Ansprüche 9 oder 10, **dadurch gekennzeichnet, dass** das Rohr derart ausgebildet wird, dass ein Teil (34) des oder jedes Endbereichs (32) einen rechteckigen Querschnitt aufweist.

12. Herstellungsverfahren nach einem beliebigen der Ansprüche 9 bis 11, **dadurch gekennzeichnet, dass** der oder jeder Endbereich (32) des oder jedes Rohrs durch Tiefziehen oder durch einen Hydroforming-Prozess verformt wird.

## Claims

1. Dashboard structure (1) for a motor vehicle comprising crosspiece (3) and at least one device (6) for fastening a side end (7) of the crosspiece (3) to a structural element (4) of the vehicle at a determined position, wherein the fastening device (6) comprises a socket part (50), into which at least one plug part (52, 53) of the structural element (4) of the vehicle engages to fasten the side end (7) of the structural element (4) of the vehicle, and the crosspiece (3) comprises at least one tubular section (20) formed in one piece comprising a regular portion (30) and a crosspiece end portion (32) defining the side end (7), wherein the socket part (50) is partly formed by a part (34) of the crosspiece end portion (32), **characterised in that** at least one latch (44, 45) is provided for holding the or each plug part (52, 53) in the socket part (50), wherein the or each latch (44, 45) is accommodated in the socket part (50).

2. Dashboard structure (1) for a motor vehicle according to claim 1, **characterised in that** it comprises an angle brace (42) accommodated inside the crosspiece end portion (32).

3. Dashboard structure (1) for a motor vehicle according to claim 2, **characterised in that** the angle brace (42) defines the socket part (50) with the part (34) of the crosspiece end portion (32).

4. Dashboard structure (1) for a motor vehicle according to claim 5, **characterised in that** the or each latch (44, 45) is movable in the socket part (50) between a locking position of the or each plug part (52, 53) and a ready position, in which the or each latch (44, 45) is set back in relation to its locking position, wherein the angle brace (42) is fitted to guide the or each latch (44, 45) between these two positions.

5. Dashboard structure (1) for a motor vehicle according to any one of the preceding claims, **characterised in that** the crosspiece end portion (32) is larger in section than the regular portion (30).

6. Dashboard structure (1) for a motor vehicle according to any one of the preceding claims, **characterised in that** the part (34) of the crosspiece end portion (32) is rectangular in cross-section.

7. Dashboard structure (1) for a motor vehicle according to any one of the preceding claims, **characterised in that** it comprises at least one lateral flange (9) for attaching dashboard elements fitted on the crosspiece end portion (32).

8. Dashboard structure (1) for a motor vehicle according to any one of the preceding claims, **characterised in that** the or each latch (44, 45) is able to be displaced by a actuator of a device for installing a dashboard into the vehicle.

9. Process for the production of a dashboard structure (1) for a motor vehicle comprising a crosspiece (3) and at least one device (6) for fastening a side end (7) of the crosspiece (3) to a structural element (4) of the vehicle at a determined position, wherein the fastening device (6) comprises a socket part (50), into which at least one plug part (52, 53) of the structural element (4) of the vehicle engages to fasten the side end (7) of the structural element (4) of the vehicle, and at least one latch (44, 45) for holding the or each plug part (52, 53), wherein the or each latch (44, 45) is accommodated in the socket part (50), **characterised in that** it comprises the following steps:
• provision of at least one tube;
• deformation of at least one end portion of the or each tube so that the or each end portion (32) forms a part of the or each socket part (50); and
• insertion of the or each latch (44, 45) into the or each end portion (32) thus shaped.

10. Production process according to claim 9, **characterised in that** an angle brace (42) is inserted inside the or each end portion (32) at the same time as the or each latch (44, 45).

11. Production process according to any one of claims 9 or 10, **characterised in that** the tube is shaped so that one part (34) of the or each end portion (32) has a rectangular cross-section.

12. Production process according to any one of claims 9 to 11, **characterised in that** the or each end portion (32) of the or each tube is deformed by embossing or hydroforming.
